# EUROPEAN PATENT APPLICATION

(11) **EP 4 601 274 A1**
(43) Date of publication of application: **13.08.2025**
(21) Application number: 23881478.4
(22) Date of filing: 06.09.2023
(51) Int. Cl.: H04M 1/02, G06F 3/14

(54) **INFORMATION DISPLAY METHOD AND APPARATUS, ELECTRONIC DEVICE, AND STORAGE MEDIUM**

(30) Priority: 26.10.2022 CN 202211339671
(71) Applicant: GUANGDONG OPPO MOBILE TELECOMMUNICATIONS CORP., LTD., Dongguan, Guangdong 523860 (CN)
(72) Inventor: WEI, Jiabai, Dongguan, Guangdong 523860 (CN)
(74) Representative: Penza, Giancarlo
(86) International application number: PCT/CN2023/117311
(87) International publication number: WO 2024/087897

(57) **Abstract**

The present application relates to the technical field of electronic devices and discloses an information display method and apparatus, an electronic device, and a storage medium. The method is applied to an electronic device including a first screen and a second screen. The method includes: receiving a notification message sent by a target application when the first screen is an off state, where the target application was switched from running on the first screen to running in the background of the electronic device; and displaying, on the second screen, key information of the notification message. According to the present application, when the first screen is in the off state and the notification message sent by the target application is received, key information of the notification message is displayed on a second screen, thereby ensuring that the notification message can be effectively and timely delivered, and improving the use experience of users.

## Description

### CROSS-REFERENCE OF RELATED APPLICATION

This application claims priority to Chinese application No. CN202211339671.1 filed October 26, 2022, and the entire contents of which are hereby incorporated by reference for all purposes.

### TECHNICAL FIELD

The present disclosure relates to the technical field of electronic devices, and particularly to an information display method and apparatus, an electronic device and a storage medium.

### BACKGROUND

With the development of science and technology, electronic devices are getting widely used, and offer more and more functions. They have become one of the necessities in people's daily life. Currently, as the increase of user demands, more and more electronic devices are designed to have multiple screens.

### SUMMARY

In view of this, the present disclosure proposes an information display method and an apparatus, an electronic device and a storage medium to solve the above problem.

In a first aspect, embodiments of the present disclosure provide an information display method for an electronic device. The electronic device includes a first screen and a second screen. In the method, a notification message sent by a target application is received while the first screen is in an off state, where the target application was switched from running on the first screen to running in background of the electronic device. Key information of the notification message is displayed on the second screen.

In a second aspect, the embodiments of the present disclosure provide an information display apparatus for an electronic device. The electronic device includes a first screen and a second screen. The apparatus includes a notification message receiving module and a key information display module. The notification message receiving module is configured to receive a notification message sent by a target application while the first screen is in an off state, where the target application was switched from running on the first screen to running in background of the electronic device. The key information display module is configured to display, on the second screen, key information of the notification message.

In a third aspect, the embodiments of the present disclosure provide an electronic device. The electronic device includes a memory and a processor. The memory is coupled to the processor. The memory stores instructions which, when being executed by the processor, cause the processor to implement the method mentioned above.

In a fourth aspect, the embodiments of the present disclosure provide a computer-readable storage medium storing program codes thereon, and the program codes are invokable by a processor to implement the method mentioned above.

### BRIEF DESCRIPTION OF THE DRAWINGS

In order to more clearly illustrate technical solutions in the embodiments of the present disclosure, drawings required for the description of the embodiments will be briefly introduced below. Apparently, the drawings described below are only some embodiments of the present disclosure. For those skilled in the art, other drawings can be obtained based on these drawings without creative work.
FIG. 1 illustrates a schematic structural diagram of a foldable electronic device 100 from a first viewing angle.
FIG. 2 illustrates a schematic structural diagram of the foldable electronic device 100 from a second viewing angle.
FIG. 3 is a schematic flow chart of an information display method provided in an embodiment of the present disclosure.
FIG. 4 schematically illustrates a first interface of the electronic device provided in the embodiment of the present disclosure.
FIG. 5 is a schematic flow chart of an information display method provided in an embodiment of the present disclosure.
FIG. 6 schematically illustrates a second interface of the electronic device provided in the embodiment of the present disclosure.
FIG. 7 is a schematic flow chart of an information display method provided in an embodiment of the present disclosure.
FIG. 8 schematically illustrates a third interface of the electronic device provided in the embodiment of the present disclosure.
FIG. 9 is a schematic flow chart of an information display method provided in an embodiment of the present disclosure.
FIG. 10 is a schematic flow chart of operation S440 in the information display method shown in FIG. 9 of the present disclosure.
FIG. 11 is a schematic flow chart of operation S450 in the information display method shown in FIG. 9 of the present disclosure.
FIG. 12 is a schematic flow chart of operation S470 in the information display method shown in FIG. 9 of the present disclosure.
FIG. 13 is a schematic flow chart of an information display method provided in an embodiment of the present disclosure.
FIG. 14 schematically illustrates a fourth interface of the electronic device provided in the embodiment of the present disclosure.
FIG. 15 is a schematic flow chart of operation S530 in the information display method shown in FIG. 13 of the present disclosure.
FIG. 16 is a first schematic diagram illustrating consecutive displaying of a first screen and a second screen provided in an embodiment of the present disclosure.
FIG. 17 is a second schematic diagram illustrating consecutive displaying of the first screen and the second screen provided in an embodiment of the present disclosure.
FIG. 18 illustrates a module block diagram of an information display apparatus provided in an embodiment of the present disclosure.
FIG. 19 illustrates a block diagram of an electronic device according to an embodiment of the present disclosure, where the electronic device implements the information display method provided in the embodiments of the present disclosure.
FIG. 20 illustrates a storage unit for storing or carrying program codes according to an embodiment of the present disclosure, where the program codes are used for implementing the information display method provided in the embodiments of the present disclosure.

### DETAILED DESCRIPTION OF PREFERRED EMBODIMENTS

In order to enable those skilled in the art to better understand the solutions of the present disclosure, the technical solutions in the embodiments of the present disclosure will be clearly and comprehensively described below in conjunction with the drawings in the embodiments of the present disclosure.

As the increase of user demands, more and more electronic devices are designed to have multiple screens. For example, the electronic device is designed to have an inner screen and an outer screen, a main screen and a cover screen, a front screen and a side screen, etc., which is not limited here. However, in the case where the electronic device is designed to include multiple screens, when there is a need to select a certain screen from the multiple screens for display, there would be a trouble in making the selection. For example, after the inner screen is closed, if an application, which previously ran on the inner screen, receives a notification message, the notification message would still be displayed on the inner screen. This causes the user to be unable to receive the notification message timely and effectively, causes confusion in information display, and leads to a poor user experience.

In view of the above, the inventor, after long-term research, proposes an information display method and apparatus, an electronic device and a storage medium provided in the embodiments of the present disclosure. In the embodiments of the disclosure, while a first screen is in an off state, when a notification message sent by a target application is received, key information of the notification message is displayed on a second screen. This ensures that the notification message can be effectively and timely delivered to the user, and improves the user experience. The specific information display method will be described in detail in the subsequent embodiments.

In the following, the electronic device involved in the information display method provided in the embodiments of the present disclosure is first introduced.

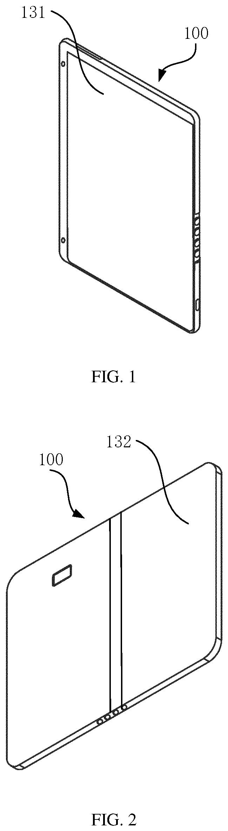

In some embodiments, as illustrated in FIG. 1 and FIG. 2, FIG. 1 illustrates a structural schematic diagram of a foldable electronic device 100 from a first perspective, and FIG. 2 illustrates a structural schematic diagram of the electronic device 100 from a second perspective. The screen of the electronic device 100 includes a first screen 131 and a second screen 132. The first screen 131 is a foldable screen, and the size of the first screen 131 is larger than the size of the second screen 132. When the first screen 131 is in an unfolded state, the first screen 131 and the second screen 132 are arranged opposite to each other. That is, when the light emitting direction of the first screen 131 faces toward the user, the light emitting direction of the second screen 132 faces away from the user. In this case, the first screen 131, which has a larger size than the second screen 132, may be used to display content. When the first screen 131 is in a folded state, the first screen 131 is hidden inside the electronic device 100. In this case, the light emitting direction of the second screen still faces the outside, and the second screen 132 may be used to display content.

That is to say, the electronic device 100 shown in FIG. 1 and FIG. 2 is an electronic device with an inward-foldable screen. When the user needs to use the first screen 131 of a larger size, the first screen 131 may be controlled to unfold, so that the light emitting directions of the first screen 131 and the second screen 132 both face the same side. When the user does not need to use the first screen 131 of a larger size, the first screen 131 may be controlled to fold, so that the first screen 131 is hidden inside the electronic device 100, thereby protecting the first screen 131.

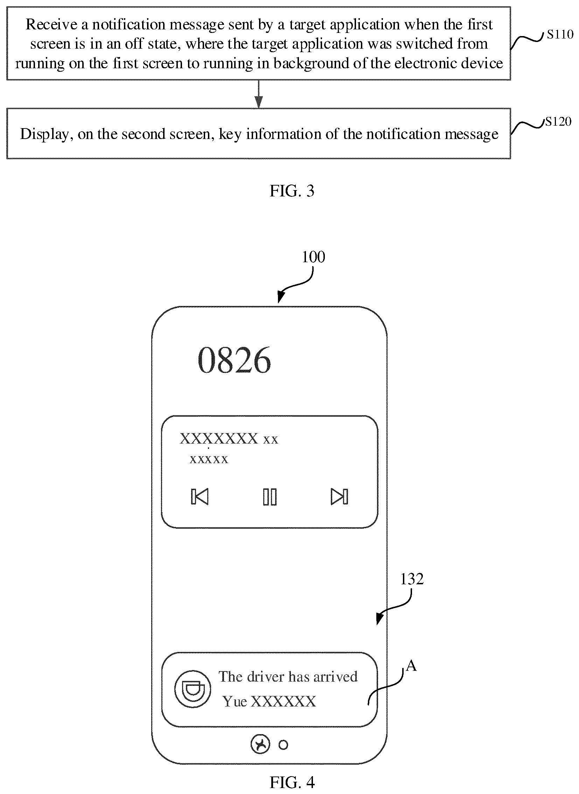

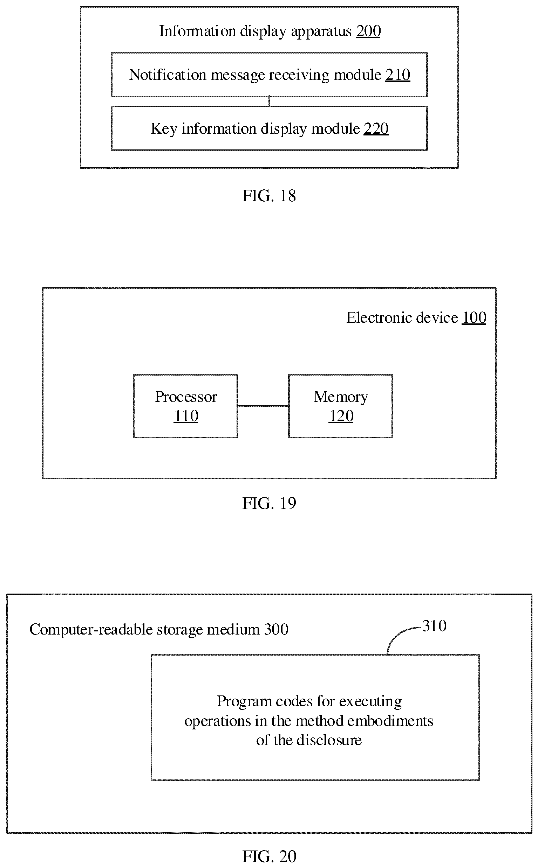

As illustrated in FIG. 3, a schematic flow chart of an information display method provided in an embodiment of the present disclosure is shown. With this method, when a notification message sent by a target application is received while the first screen is in an off state, key information of the notification message is displayed on the second screen. This ensures that the notification message can be effectively and timely delivered, and improves the user experience. In some specific embodiments, the information display method is applied to an information display apparatus 200 as shown in FIG. 18 and an electronic device 100 equipped with the information display apparatus 200 (FIG. 19). The specific process of the embodiment will be described below by taking an electronic device as an example. Of course, it is understandable that the electronic device used in the embodiment may include a smart phone, a tablet computer, a wearable electronic device, etc., which is not limited here. In the embodiment, the electronic device includes a first screen and a second screen. The process shown in FIG. 3 is described in detail below. The information display method may specifically include operations S110-S120 as follows.

At S110, a notification message sent by a target application is received when the first screen is in an off state, where the target application was switched from running on the first screen to running in background of the electronic device.

The electronic device may be installed with the target application, where the target application is connected to a software development kit (SDK) provided by the system of the electronic device, and transmits some information, text and the like to the system of the electronic device through the SDK. The system of the electronic device displays this information by launching an independent window. As an implementation, after the target application is connected to the SDK, it connects to a corresponding service in the service side through bindservice; and after the service is successfully connected, the target application may send messages to the service side through an interface defined in the SDK.

In some implementations, the target application is an application that was switched from running on the first screen to running in the background of the electronic device. That is, the target electronic device was switched from running in the foreground (the first screen) of the electronic device to running in the background of the electronic device. For example, in a case where the target application is running on the first screen, when the first screen of the electronic device is turned off (for example, when it is folded), the target application is switched from running on the first screen to running in the background of the electronic device. For another example, in the case where the target application is running on the first screen, in response to a switching instruction, the target application is switched to running in the background of the electronic device.

In the embodiments, after the target application is switched from running on the first screen to running in the background of the electronic device, a notification message sent by the target application may be received when the first screen is in the off state or when the first screen is in an on state.

In some implementations, the electronic device may detect status information of the first screen, and determine, based on the status information, whether the first screen is in the off state or the on state. A certain reference object may be determined first, and then a relative relationship between the first screen and the reference object may be detected, where the relative relationship is for example a relative position relationship, or a relative motion relationship, which is not limited here. Optionally, the second screen may be determined as the reference object, or the rotation axis may be determined as the reference object.

As one implementation, the status information of the first screen may be determined according to a status value of the electronic device. The electronic device may be pre-set with a first status value corresponding to status information indicating that the first screen is in the off state, and a second status value corresponding to status information indicating that the first screen is in the on state. In this case, the status value of the electronic device may be obtained. If the status value of the electronic device is the first status value, it may be determined that the first screen is in the off state; and if the status value of the electronic device is the second status value, it may be determined that the first screen is in the on state.

As another implementation, the status information of the first screen may be determined according to the brightness value of the first screen. The electronic device may be preset that: when the brightness value of the first screen is 0, the status information of the first screen indicates the off state; and when the brightness value of the first screen is greater than 0, the status information of the first screen indicates the on state. In this case, the brightness value of the first screen may be obtained. If the brightness value of the first screen is 0, it may be determined that the first screen is in the off state; and if the brightness value of the first screen is greater than 0, it may be determined that the first screen is in the on state.

In some implementations, receiving the notification message sent by the target application may include that: the target application triggers a target event, and sends a notification message corresponding to the target event to the service side. As an implementation, the target application triggers the target event, encapsulates the notification message corresponding to the target event into a message body defined in the SDK, and sends the message body to the service side.

At S120, key information of the notification message is displayed on the second screen.

In the embodiment, after the notification message is received, the electronic device may display the key information of the notification message on the second screen. As an implementation, when the first screen is in the off state (for example, when the first screen is closed), the second screen may display a shell container desktop card. The desktop card may register with the service side to listen for messages when it is started. When the service side receives a notification message, it would forward the notification message to the desktop card service. When the desktop card service receives the notification message, a window may be created to display the key information of the notification message.

In some implementations, after the notification message is received, the electronic device may analyze the notification message to extract the key information from the notification message, and display the key information of the notification message on the second electronic device.

In some embodiments, the electronic device displaying the key information of the notification message on the second screen may include: displaying, on the second screen, the key information of the notification message until a first touch operation performed on the key information is detected; alternatively, displaying, on the second screen, the key information of the notification message until the display time reaches a preset time.

FIG. 4 schematically illustrates a first interface of the electronic device provided in the embodiment of the present disclosure. As illustrated in FIG. 4, the first screen 131 of the electronic device 100 is in the off state, and the second screen 132 of the electronic device is in an on state. The second screen 132 may display key information A of the notification message.

In the information display method provided in the embodiment of the present disclosure, a notification message sent by a target application is received when the first screen is in the off state, where the target application was switched from running on the first screen to running in the background of the electronic device. Key information of the notification message is displayed on the second screen. By displaying, on the second screen, the key information of the notification message when the notification message sent by the target application is received in the off-state of the first screen, it is ensured that the notification message can be effectively and timely delivered, and the user experience is improved.

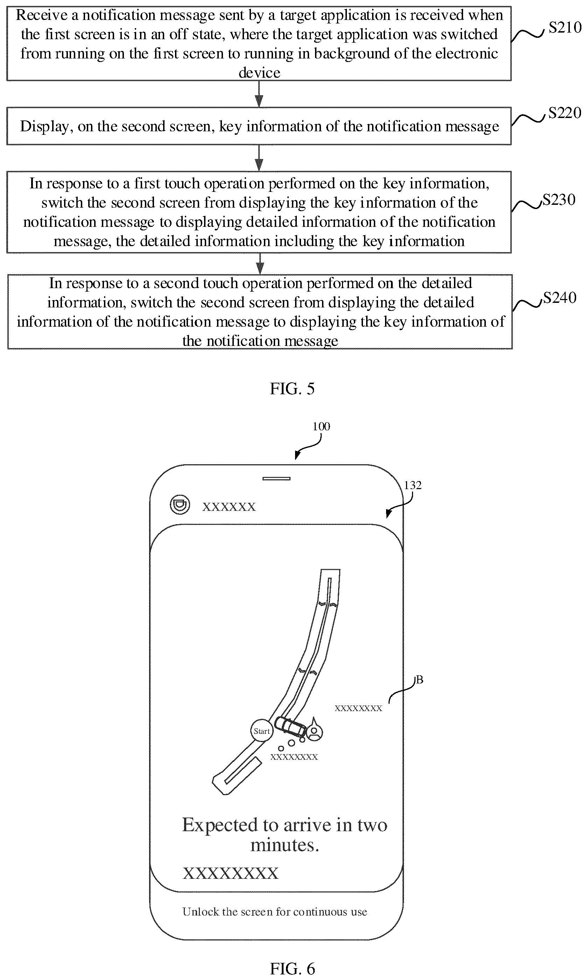

As illustrated in FIG. 5, a schematic flow chart of an information display method provided in an embodiment of the present disclosure is shown. The method is applied to an electronic device including a first screen and a second screen. The process shown in FIG. 5 will be described in detail below. The information display method may specifically include operations S210-S240 as follows.

At S210, a notification message sent by a target application is received when the first screen is in an off state, where the target application was switched from running on the first screen to running in background of the electronic device.

At S220, key information of the notification message is displayed on the second screen.

For the detailed description of operations S210 and S220, reference may be made to operations S110 and S120, which will not be repeated here.

At S230, in response to a first touch operation performed on the key information, the second screen is switched from displaying the key information of the notification message to displaying detailed information of the notification message, where the detailed information includes the key information.

The electronic device may display the key information of the notification message, or may display the detailed information of the notification message, the detailed information may include the key information. For example, if the target application is for example a taxi-hailing application, and the notification message is information on the hailed vehicle, the key information of the notification message may include the estimated arrival time of the hailed vehicle, the license plate number of the hailed vehicle, etc., and the detailed information of the notification message may include the estimated arrival time of the hailed vehicle, the license plate number of the hailed vehicle, the travel route of the hailed vehicle, etc.

In the embodiment, while the key information of the notification message is displayed on the second screen, a touch operation performed on the key information may be detected. When the first touch operation performed on the key information is detected, in response to the first touch operation performed on the key information, the second screen may be switched from displaying the key information of the notification message to displaying the detailed information of the notification message.

In some implementations, the first touch operation may include a single-finger click operation, a multi-finger click operation, a single-finger slide operation, a multi-finger slide operation, a single-finger press operation, a multi-finger press operation, etc., which is not limited here. As an implementation, the first touch operation may include a click operation performed on (the key information displayed on) the second screen.

In some implementations, displaying, on the second screen, the key information of the notification message may include: displaying, in a first control on the second screen, the key information of the notification message. Displaying, on the second screen, the detailed information of the notification message may include: displaying, in a second control on the second screen, the detailed information of the notification message. Based on this, switching, on the second screen, from displaying the key information of the notification message to displaying the detailed information of the notification message in response to the first touch operation performed on the key information may include: in response to the first touch operation performed on the first control, switching from displaying the key information of the notification message through the first control on the second screen to displaying the detailed information of the notification message through the second control on the second screen.

FIG. 6 schematically illustrates a second interface of the electronic device provided in the embodiment of the present disclosure. As illustrated in FIG. 6, the first screen 131 of the electronic device 100 is in the off state, and the second screen 132 of the electronic device is in the on state. The second screen 132 may display detailed information B of the notification message.

At S240, in response to a second touch operation performed on the detailed information, the second screen is switched from displaying the detailed information of the notification message to displaying the key information of the notification message.

In the embodiment, while the detailed information of the notification message is displayed on the second screen, a touch operation performed on the detailed information may be detected. When the second touch operation performed on the detailed information is detected, in response to the second touch operation performed on the detailed information, the second screen may be switched from displaying the detailed information of the notification message to displaying the key information of the notification message.

In some embodiments, the second touch operation may include a single-finger click operation, a multi-finger click operation, a single-finger slide operation, a multi-finger slide operation, a single-finger press operation, a multi-finger press operation, etc., which is not limited here. As an implementation, the second touch operation may include a first target slide operation performed on (the detailed information displayed on) the second screen, and the first target slide operation is a slide operation from the top to the bottom of the second screen.

In some implementations, displaying, on the second screen, the key information of the notification message may include: displaying, in a first control on the second screen, the key information of the notification message. Displaying, on the second screen, the detailed information of the notification message may include: displaying, in a second control on the second screen, the detailed information of the notification message. Based on this, switching, on the second screen, from displaying the detailed information of the notification message to displaying the key information of the notification message in response to the second touch operation performed on the detailed information may include: in response to the second touch operation performed on the second control, switching from displaying the detailed information of the notification message through the second control on the second screen to displaying the key information of the notification message through the first control on the second screen.

In the information display method provided in the embodiment of the present disclosure, a notification message sent by a target application is received when the first screen is in an off state, where the target application was switched from running on the first screen to running in the background of the electronic device. Key information of the notification message is displayed on the second screen. In response to a first touch operation performed on the key information, the second screen is switched from displaying the key information of the notification message to displaying detailed information of the notification message. In response to a second touch operation performed on the detailed information, the second screen is switched from displaying the detailed information of the notification message to displaying the key information of the notification message. Compared with the information display method shown in FIG. 3, this embodiment can also control, through the touch operation(s), the second screen to be switched between displaying the key information of the notification message and displaying the detailed information of the notification message, which improves the user's interactive experience and usage experience.

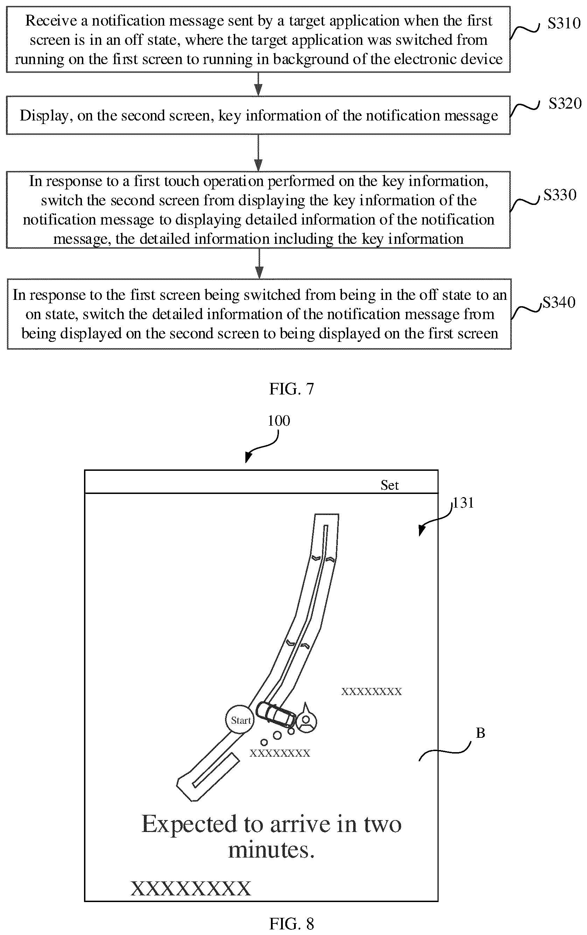

As illustrated in FIG. 7, a schematic flow chart of an information display method provided in an embodiment of the present disclosure is shown. The method is applied to an electronic device including a first screen and a second screen. The process shown in FIG. 7 is described in detail below. The information display method may specifically include operations S310-S340 as follows.

At S310, a notification message sent by a target application is received when the first screen is in an off state, where the target application was switched from running on the first screen to running in background of the electronic device.

At S320, key information of the notification message is displayed on the second screen.

For the detailed description of operations S310-S320, reference may be made to operations S110-S120, which will not be repeated here.

At S330, in response to a first touch operation performed on the key information, the second screen is switched from displaying the key information of the notification message to displaying detailed information of the notification message, where the detailed information includes the key information.

For the detailed description of operation S330, reference may be made to operation S230, which will not be repeated here.

At S340, in response to the first screen being switched from being in the off state to an on state, the detailed information of the notification message is switched from being displayed on the second screen to being displayed on the first screen.

In the embodiment, while the electronic device displays the detailed information of the notification message on the second screen, it may detect the state of the first screen to determine whether the first screen is switched from being in the off state to being in the on state. If it is determined that the first screen is switched from being in the off state to being in the on state, it may be considered that the user desires to use the first screen, and the detailed information of the notification message may be switched from being displayed on the second screen to being displayed on the first screen.

As an implementation, the status value of the electronic device may be obtained. If the status value of the electronic device is switched from the first status value to the second status value, it may be determined that the first screen is switched from being in the off state to being in the on state, and the detailed information of the notification message may be switched from being displayed on the second screen to being displayed on the first screen.

As another implementation, the brightness value of the first screen may be obtained. If the brightness value of the electronic device is switched from being equal to 0 to being greater than 0, it may be determined that the first screen is switched from being in the off state to being in the on state, and the detailed information of the notification message may be switched from being displayed on the second screen to being displayed on the first screen.

In some embodiments, after the detailed information of the notification message is switched from being displayed on the second screen to being displayed on the first screen, the second screen may be controlled to be off (such as screen off), or the second screen may be controlled to be switched from displaying the detailed information of the notification message to displaying other information (for example, displaying the time, the date, or the key information of the notification message).

FIG. 8 schematically illustrates a third interface of the electronic device provided in the embodiment of the present disclosure. As illustrated in FIG. 8, the first screen 131 of the electronic device 100 is in the on state, and the first screen 131 may display detailed information B of the notification message.

In the information display method provided in the embodiment of the present disclosure, a notification message sent by a target application is received when the first screen is in the off state, where the target application was switched from running on the first screen to running in the background of the electronic device. Key information of the notification message is displayed on the second screen. In response to a first touch operation performed on the key information, the second screen is switched from displaying the key information of the notification message to displaying the detailed information of the notification message. In response to the first screen being switched from being in the off state to being in the on state, the detailed information of the notification message is switched from being displayed on the second screen to being displayed on the first screen. Compared with the information display method shown in FIG. 3, this embodiment can also control, through the touch operation(s), the second screen to be switched between displaying the key information of the notification message and displaying the detailed information of the notification message, which improves the user's interactive experience and usage experience. In addition, based on whether the first screen is in the off state or the on state, the detailed information of the notification message can be switched between being displayed on the first screen and being displayed the second screen, which can adapt to the user's usage habits and improve the user's usage experience.

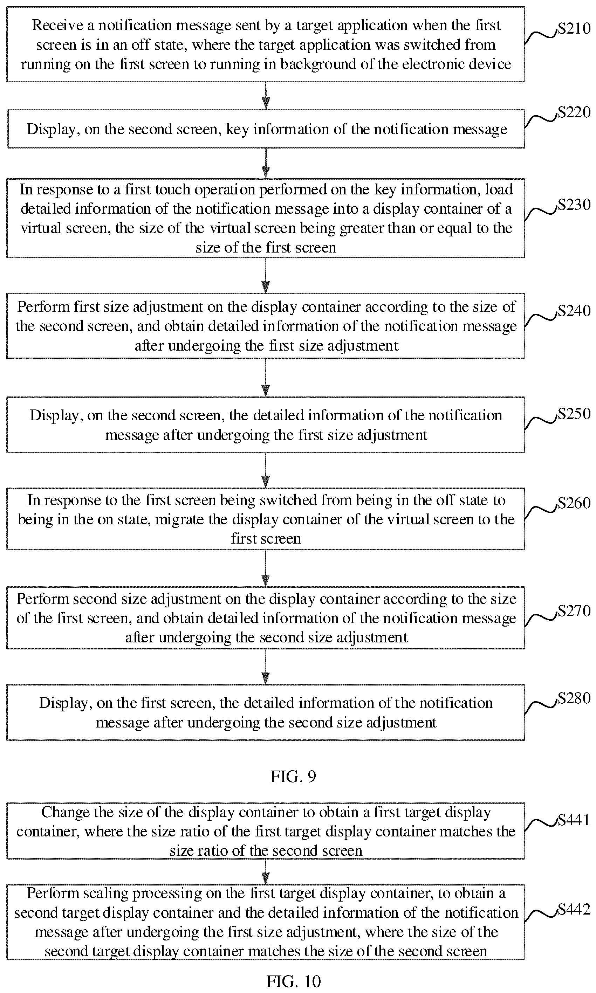

As illustrated in FIG. 9, a schematic flow chart of an information display method provided in an embodiment of the present disclosure is shown. The method is applied to an electronic device including a first screen and a second screen, the size of the first screen is larger than the size of the second screen. The process shown in FIG. 9 is described in detail below. The information display method may specifically include operations S410-S480 as follows.

At S410, a notification message sent by a target application is received when the first screen is in an off state, where the target application was switched from running on the first screen to running in background of the electronic device.

At S420, key information of the notification message is displayed on the second screen.

For the detailed description of operations S410-S420, reference may be made to operations S110-S120, which will not be repeated here.

At S430, in response to a first touch operation performed on the key information, detailed information of the notification message is loaded into a display container of a virtual screen, where the size of the virtual screen is greater than or equal to the size of the first screen.

In the embodiment, the size of the first screen is larger than the size of the second screen, and the size of the virtual screen is larger than or equal to the size of the first screen. For example, the first screen is the inner screen of the electronic device in the unfolded state, and the second screen is the outer screen of the electronic device in the folded state. The size of the virtual screen may be created by the electronic device, and the created size of the virtual screen may be greater than or equal to the size of the first screen, and the specific size thereof is not limited here.

In the embodiment, when the first touch operation performed on the key information is detected, in response to the first touch operation performed on the key information, the detailed information of the notification message may be loaded into the display container of the virtual screen, where the size of the virtual screen is greater than or equal to the size of the first screen.

In some implementations, when the first touch operation performed on the key information is detected, the detailed information of the notification message may be loaded into the display container of the virtual screen in response to the first touch operation performed on the key information. As an example, when the first touch operation performed on the key information is detected (for example, when a click operation performed on the first control is detected), in response to the first touch operation performed on the key information, corresponding target intent may be acquired from a corresponding service (the target intent refers to interface information to be represented on the second screen (including the detailed information of the notification message)), and the target intent may be loaded into a display container (Task) of the virtual screen.

At S440, first size adjustment is performed on the display container according to the size of the second screen, and detailed information of the notification message after undergoing the first size adjustment is obtained.

In the embodiment, after the detailed information of the notification message is loaded into the display container of the virtual screen, the first size adjustment may be performed on the display container according to the size of the second screen, and the detailed information of the notification message after undergoing the first size adjustment is obtained. It is understandable that, since the detailed information of the notification message is loaded into the display container of the virtual screen, performing the first size adjustment on the display container according to the size of the second screen is equivalent to performing the first size adjustment on the detailed information of the notification message according to the size of the second screen, and the detailed information of the notification message after undergoing the first size adjustment is thus obtained.

In some embodiments, performing the first size adjustment on the display container may include: changing the size of the display container, and/or changing the size ratio of the display container.

FIG. 10 illustrates a flow chart of operation S440 of the information display method shown in FIG. 9 of the present disclosure. The process shown in FIG. 10 will be described in detail below. The method may specifically include operations S441-S442 as follows.

At S441, the size of the display container is changed to obtain a first target display container, where the size ratio of the first target display container matches the size ratio of the second screen.

In some embodiments, after the detailed information of the notification message is loaded into the display container of the virtual screen, the size of the display container may be changed according to the size of the second screen to obtain the first target display container, where the size ratio of the first target display container matches the size ratio of the second screen. It is understandable that, since the detailed information of the notification message is loaded into the display container of the virtual screen, changing the size of the display container according to the size of the second screen is equivalent to changing the display size of the detailed information of the notification message according to the size of the second screen, and the detailed information of the notification message after the size change is thus obtained.

As an implementation, after the detailed information of the notification message is loaded into the Task of the virtual screen, the Task may be resized, according to the size of the second screen, to the size ratio of the second screen, thereby obtaining the first target display container.

At S442, scaling processing is performed on the first target display container, to obtain a second target display container and the detailed information of the notification message after undergoing the first size adjustment, where the size of the second target display container matches the size of the second screen.

In some embodiments, after the first target display container is obtained, the first target display container may be scaled according to the size of the second screen, to obtain the second target display container and the detailed information of the notification message after undergoing the first size adjustment, where the size of the second target display container matches the size of the second screen. It is understandable that, since the detailed information of the notification message is in the first target display container, performing scaling processing on the first target display container according to the size of the second screen is equivalent to proportionally changing the display ratio of the detailed information of the notification message according to the size of the second screen, and the detailed information of the notification message after the proportional change (after undergoing the first size adjustment) is thus obtained.

As an implementation, after the first target display container (first target Task) is obtained, the first target Task may be scaled to obtain a second target Task, where a final display effect of the second target Task is supported by the size of the second screen.

At S450, the detailed information of the notification message after undergoing the first size adjustment is displayed on the second screen.

In the embodiment, after the detailed information of the notification message after undergoing the first size adjustment is obtained, the detailed information of the notification message after undergoing the first size adjustment may be displayed on the second screen. The detailed information of the notification message originally needs to be displayed on the first screen, and the display parameters thereof are adapted to the first screen. However, the second size of the second screen is smaller than the size of the first screen. If the detailed information of the notification message is directly displayed on the second screen, most of the interface may be incompletely displayed or there may be overlapping of content due to the small physical size and resolution of the second screen, resulting in abnormal use. In view of this, in the embodiment, the first size adjustment may be performed on the detailed information of the notification message, so that the display parameters of the detailed information of the notification message after undergoing the first size adjustment can be adapted to the second screen, which can improve the display effect of the detailed information of the notification message on the second screen.

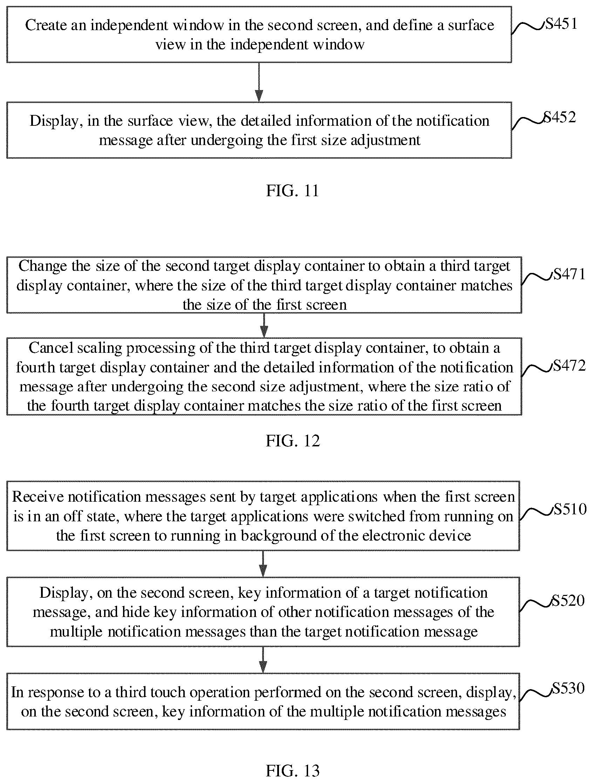

As illustrated in FIG. 11, a flow chart of operation S450 of the information display method shown in FIG. 9 of the present disclosure is shown. The process shown in FIG. 11 will be described in detail below. The method may specifically include operations S451-S452 as follows.

At S451, an independent window is created in the second screen, and a surface view is defined in the independent window.

In some implementations, after the detailed information of the notification message after undergoing the first size adjustment is obtained, an independent window may be created in the second screen as a temporary display window, and a surface view (SurfaceView) may be defined in the independent window as a carrier.

At S452, the detailed information of the notification message after undergoing the first size adjustment is displayed in the surface view.

In some implementations, after the surface view is defined in the independent window, the detailed information of the notification message after undergoing the first size adjustment may be displayed in the surface view.

At S460, in response to the first screen being switched from being in the off state to being in the on state, the display container of the virtual screen is migrated to the first screen.

In the embodiment, while the electronic device displays the detailed information of the notification message after undergoing the first size adjustment on the second screen, it may detect the state of the first screen to determine whether the first screen is switched from being in the off state to being in the on state. If it is determined that the first screen is switched from being in the off state to being in the on state, it may be considered that the user desires to use the first screen, and the display container of the virtual screen may be migrated to the first screen.

At S470, second size adjustment is performed on the display container according to the size of the first screen, and detailed information of the notification message after undergoing the second size adjustment is obtained.

In the embodiment, in the case where the display container of the virtual screen is migrated to the first screen, the second size adjustment may be performed on the display container according to the size of the first screen, to obtain the detailed information of the notification message after undergoing the second size adjustment. It is understandable that, since the detailed information of the notification message is loaded into the display container of the virtual screen, performing the second size adjustment on the display container according to the size of the first screen is equivalent to performing the second size adjustment on the detailed information of the notification message according to the size of the second screen, and the detailed information of the notification message after undergoing the second size adjustment is thus obtained.

In some embodiments, performing the second size adjustment on the display container may include: changing the size of the display container, and/or cancelling the proportional change on the size of the display container.

As illustrated in FIG. 12, a flow chart of operation S470 of the information display method shown in FIG. 9 of the present disclosure is shown. The process shown in FIG. 12 will be described in detail below. The method may specifically include operations S471-S472 as follows.

At S471, the size of the second target display container is changed to obtain a third target display container, where the size of the third target display container matches the size of the first screen.

In some embodiments, when the second target display container is obtained and it is detected that the first screen is switched from being in the off state to being in the on state, the size of the second target display container may be changed to obtain the third target display container, where the size of the third target display container matches the size of the first screen. It is understandable that, since the detailed information of the notification message is in the second target display container, changing the size of the second target display container according to the size of the first screen is equivalent to changing the display size of the detailed information of the notification message according to the size of the first screen, and the detailed information of the notification message after the size change is thus obtained.

As an implementation, when the second target display container (second target Task) is obtained and it is detected that the first screen is switched from being in the off state to being in the on state, the second target Task may be migrated to the first screen; in addition, the second target Task may be resized to the size of the first screen, thereby obtaining the third target display container.

At S472, scaling processing of the third target display container is cancelled, to obtain a fourth target display container and the detailed information of the notification message after undergoing the second size adjustment, where the size ratio of the fourth target display container matches the size ratio of the first screen.

In some embodiments, after the third target display container is obtained, the scaling processing of the third target display container may be canceled, and the fourth target display container and the detailed information of the notification message after undergoing the second size adjustment are obtained, where the size ratio of the fourth target display container matches the size ratio of the second screen. It is understandable that, since the detailed information of the notification message is in the third target display container, canceling the scaling processing of the first target display container is equivalent to canceling the proportional change of the display ratio of the detailed information of the notification message, and the detailed information of the notification message after scale recovery (after undergoing the second size adjustment) is obtained.

At S480, the detailed information of the notification message after undergoing the second size adjustment is displayed on the first screen.

In the embodiment, after the detailed information of the notification message after undergoing the second size adjustment is obtained, the detailed information of the notification message after undergoing the second size adjustment may be displayed on the first screen. As such, a continuous display effect of the detailed information of the notification message from the second screen to the first screen is achieved.

In the information display method provided in the embodiment of the present disclosure, a notification message sent by a target application is received when the first screen is in the off state, where the target application was switched from running on the first screen to running in the background of the electronic device. Key information of the notification message is displayed on the second screen. In response to a first touch operation performed on the key information, the detailed information of the notification message is loaded into a display container of a virtual screen, where the size of the virtual screen is greater than or equal to the size of the first screen. First size adjustment is performed on the display container according to the size of the second screen, and detailed information of the notification message after undergoing the first size adjustment is obtained. The detailed information of the notification message after undergoing the first size adjustment is displayed on the second screen. In response to the first screen being switched from being in the off state to being in the on state, the display container of the virtual screen is migrated to the first screen. Second size adjustment is performed on the display container according to the size of the first screen, and detailed information of the notification message after undergoing the second size adjustment is obtained. The detailed information of the notification message after undergoing the second size adjustment is displayed on the first screen. Compared with the information display method shown in FIG. 3, this embodiment can also control, through the touch operation(s), the second screen to be switched between displaying the key information of the notification message and displaying the detailed information of the notification message, which improves the user's interactive experience and usage experience. In addition, based on whether the first screen is in the off state or the on state, the detailed information of the notification message can be switched between being displayed on the first screen and being displayed on the second screen, which can adapt to the user's usage habits and improve the user's usage experience.

As illustrated in FIG. 13, a flow chart of an information display method according to an embodiment of the present disclosure is shown. The method is applied to the above electronic device including a first screen and a second screen. There are multiple target applications, and each of the multiple target applications sends one or more notification messages. The following will describe the process shown in FIG. 13.

At S510, notification messages sent by target applications are received when the first screen is in an off state, where the target applications were switched from running on the first screen to running in background of the electronic device.

For the detailed description of operation S510, reference may be made to operation S110, which will not be repeated here.

At S520, key information of a target notification message is displayed on the second screen, and key information of other notification messages of the multiple notification messages than the target notification message is hidden, where the receipt time of the target notification message is the latest among the receipt times of the multiple notification messages, or the priority of the target notification message is the highest among the priorities of the multiple notification messages.

In the embodiment, there are multiple target applications, and each of the multiple target applications sends one or more notification messages. The multiple target applications may be of a same type, for example, the multiple target applications may all be food delivery (take away) applications, or taxi-hailing applications. Alternatively, the multiple target applications may be of different types, for example, the multiple target applications may include food delivery applications, and taxi-hailing applications. Multiple notification messages may be from a same target application. For example, multiple notification messages may be all from one food delivery application. Alternatively, a part of the multiple notification messages may be from the food delivery application, and another part of the notification messages may be from the taxi-hailing application.

In the embodiment, if the electronic device receives multiple notification messages, it may determine the target notification message from the multiple notification messages, and display, on the second screen, the key information of the target notification message, and hide the key information of other notification messages of the multiple notification messages than the target notification message. As an implementation, displaying, on the second screen, the key information of the target notification message may include: displaying, in the first control on the second screen, the key information of the target notification message, and hiding the key information of other notification messages of the multiple notification messages than the target notification message. As an implementation, hiding the key information of other notification messages of the multiple notification messages than the target notification message may include: not displaying, on the second screen, the key information of other notification messages of the multiple notification messages than the target notification message, or blurring, on the second screen, the key information of other notification messages of the multiple notification messages than the target notification message.

In some implementations, determining the target notification message from the multiple notification messages may include: determining, from the multiple notification messages, a notification message having a latest reception time as the target notification message, i.e., determining, as the target notification message, a notification message whose reception time is the latest among the receipt times of the multiple notification messages. As an implementation, when the electronic device receives each of the multiple notification messages, it records the receipt time of the notification message, and compares the receipt times of the multiple notification messages to determine the notification message having the latest receipt time, and determines the notification message having the latest receipt time as the target notification message.

In some implementations, determining the target notification message from the multiple notification messages may include: determining, from the multiple notification messages, a notification message having the highest priority as the target notification message, i.e., determining, as the target notification message, a notification message whose priority is the highest among the priorities of the multiple notification messages. As an implementation, when the electronic device receives the multiple notification messages, it may obtain the priority of each of the notification messages, and compare the priorities of the multiple notification messages to determine the notification message with the highest priority, and determine the notification message with the highest priority as the target notification message.

At S530, in response to a third touch operation performed on the second screen, key information of the multiple notification messages is displayed on the second screen.

In the embodiment, while the key information of the target notification message is displayed on the second screen, a touch operation performed on the second screen may be detected. When the third touch operation performed on the second screen is detected, in response to the third touch operation performed on the second screen, the second screen may be switched from displaying the key information of the target notification message to displaying the key information of the multiple notification messages.

In some embodiments, the third touch operation may include a single-finger click operation, a multi-finger click operation, a single-finger slide operation, a multi-finger slide operation, a single-finger press operation, a multi-finger press operation, etc., which is not limited here. As an implementation, the third touch operation may include a second target slide operation performed on (the key information displayed on) the second screen, where the second target slide operation is a slide operation from the top to the top of the second screen.

In some implementations, displaying, on the second screen, the key information of the multiple notification messages may include: simultaneously displaying, on the second screen, the key information of multiple notification messages, or displaying, on the second screen, the key information of the multiple notification messages in a switching manner.

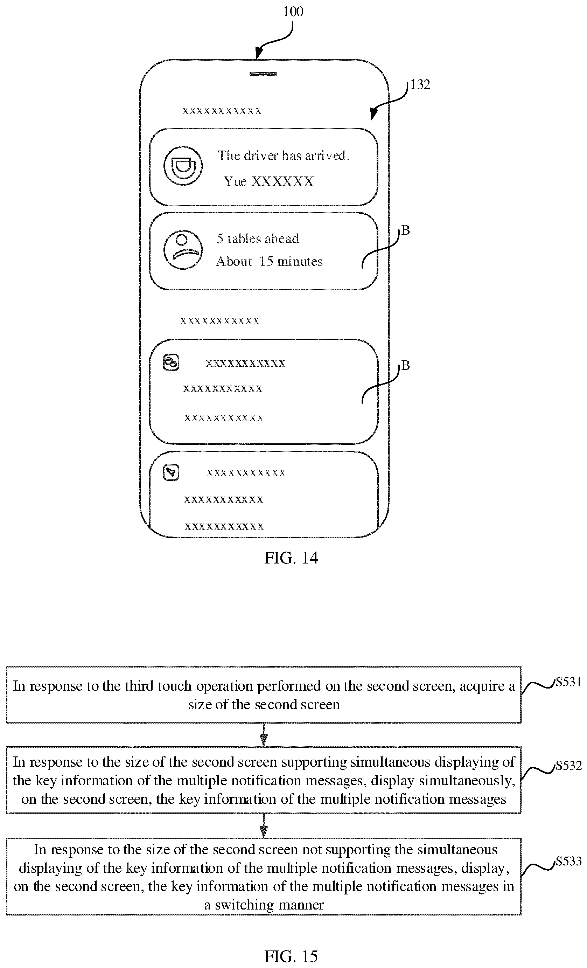

FIG. 14 schematically illustrates a fourth interface of the electronic device provided in the embodiment of the present disclosure. As illustrated in FIG. 14, the first screen 131 of the electronic device 100 is in the off state, and the second screen 132 of the electronic device is in the on state. The second screen 132 may display detailed information B of multiple notification messages.

As illustrated in FIG. 15, a flowchart of operation S530 of the information display method shown in FIG. 13 of the present disclosure is shown. The process shown in FIG. 15 will be described in detail below. The information display method may specifically include operations S531-S532 as follows.

At S531, in response to the third touch operation performed on the second screen, a size of the second screen is acquired.

In some implementations, when the third touch operation performed on the second screen is detected, the size of the second screen may be acquired in response to the third touch operation performed on the second screen.

As an implementation, the electronic device may pre-acquire and store the size of the second screen, and then, the size of the second screen may be acquired locally on the electronic device in response to the third touch operation performed on the second screen.

As another implementation, in response to the third touch operation performed on the electronic device, the electronic device may obtain the parameter of a first side and the parameter of a second side of the second screen, and determine the size of the second screen based on the parameter of the first side and the parameter of the second side, where the first side and the second side are adjacent sides.

At S532, in response to the size of the second screen supporting simultaneous displaying of the key information of the multiple notification messages, the key information of the multiple notification messages is displayed simultaneously on the second screen.

In the embodiment, the electronic device may pre-set and store a screen size that supports the simultaneous displaying of the key information of multiple notification messages (hereinafter referred to as a preset size). Then, after the electronic device acquires the size of the second screen, it may compare the size of the second screen with the preset size to determine whether the size of the second screen is greater than or equal to the preset size. If the size of the second screen is greater than or equal to the preset size, it shows that the second screen supports the simultaneous displaying of the key information of the multiple notification messages. If the size of the second screen is smaller than the preset size, it shows that the second screen does not support the simultaneous displaying of the key information of the multiple notification messages.

In some implementations, if the size of the second screen supports the simultaneous displaying of the key information of the multiple notification messages, the key information of the multiple notification messages may be simultaneously displayed on the second screen. For example, assuming that there are 5 notification messages, if the size of the second screen supports the simultaneous displaying of the key information of the 5 notification messages, the key information of the 5 notification messages may be displayed simultaneously on the second screen.

At S533, in response to the size of the second screen not supporting the simultaneous displaying of the key information of the multiple notification messages, the key information of the multiple notification messages are displayed on the second screen in a switching manner.

In some implementations, if the size of the second screen does not support the simultaneous displaying of the key information of the multiple notification messages, the key information of the multiple notification messages may be displayed in a switching manner on the second screen. For example, assuming that there are 5 notification messages, if the size of the second screen does not support the simultaneous displaying of key information of the 5 notification messages (for example, it only supports the simultaneous displaying of key information of 3 notification messages), then the 5 notification messages may be displayed on the second screen in a switching manner, that is, three of the 5 notification messages are switched to be displayed whiling hiding other two notification messages.

In the information display method provided in the embodiment of the present disclosure, multiple notification messages sent by multiple target applications are received when the first screen is in the off state, where the target applications were switched from running on the first screen to running in the background of the electronic device. Key information of a target notification message of the multiple notification messages is displayed on the second screen, and key information of other notification messages of the multiple notification messages than the target notification message is hidden. In response to a third touch operation performed the second screen, the key information of the multiple notification messages are displayed on the second screen. Compared with the information display method shown in FIG. 3, in this embodiment, it can also receive and display the key information of multiple notification messages, which improves the adaptability of the electronic device to multiple applications.

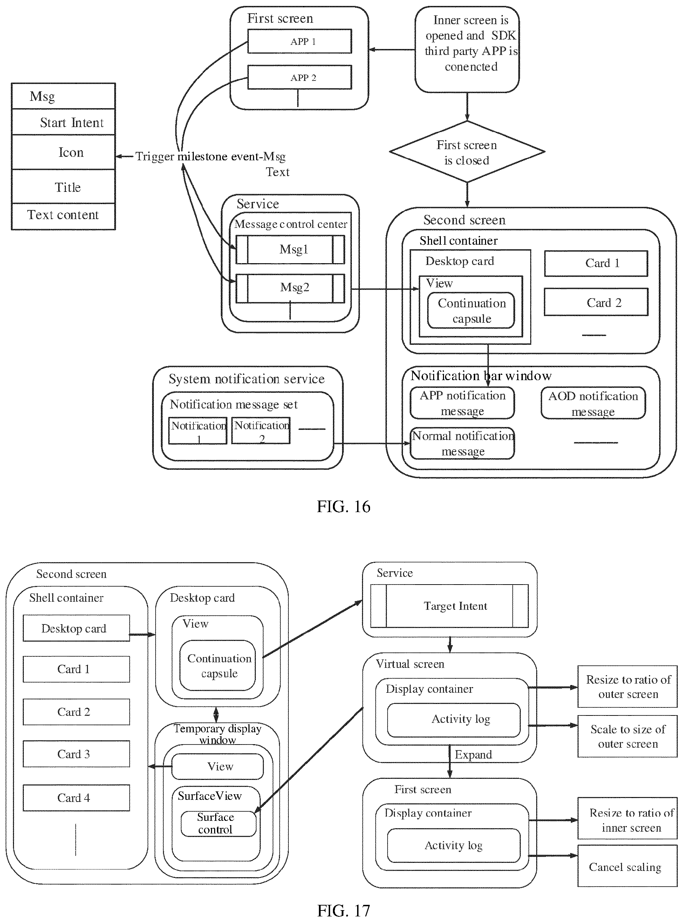

As illustrated in FIG. 16, a first schematic diagram illustrating consecutive displaying of the first screen and the second screen provided in an embodiment of the present disclosure is shown. As illustrated in FIG. 16, (1) the first screen opens an application connected to the SDK, and after the first screen is closed, the second screen displays a shell container desktop card; (2) after the first screen is closed, when the application connected to the SDK triggers a milestone event (the application connected to the SDK sends a notification to the service side), the application connected to the SDK encapsulates the event message into the message data result defined in the SDK and passes it to the service side; (3) the desktop card registers with the service side to listen for messages at the time of starting; when the service side receives the milestone message, it forwards the message to the desktop card service, and the desktop card service, upon receiving the message, creates a View to display a capsule message; and (4) when multiple applications trigger milestone events, the service side forward the messages to the desktop card service; when the notification bar window of the second screen is pulled down, the notification bar window encapsulate the messages forwarded from the service side into the corresponding notification forms and display them in the notification bar window.

As illustrated in FIG. 17, a second schematic diagram illustrating consecutive displaying of the first screen and the second screen provided in an embodiment of the present disclosure is shown. As illustrated in FIG. 17, (1) when a capsule window is clicked, its corresponding target intent is acquired from the service side; (2) the target intent is loaded into a virtual Display (virtual screen), and the corresponding Task is resized to the size ratio of the second screen, and then is scaled so that the final display effect of the Task can be supported by the size of the second screen; (3) an independent window is created in the second screen as a temporary display window, and a SurfaceView is defined in the window as a carrier to carry the content displayed in the virtual screen; and (4) in the expansion scene of scene capsule, when the first screen of the electronic device is turned on, the Task in the virtual screen is migrated to the first screen, and the Task is resized to the size of the first screen, and the scaling processing is canceled, thereby achieving an effect that the capsule temporary layer is succeeded from the second screen to the first screen.

As illustrated in FIG. 18, a module block diagram of an information display apparatus provided in an embodiment of the present disclosure is shown. The information display apparatus 200 is applied to/implemented in the above electronic device including a first screen and a second screen. The following will describe the block diagram shown in FIG. 18. The information display apparatus 200 includes a notification message receiving module 210 and a key information display module 220.

The notification message receiving module 210 is configured to receive a notification message sent by a target application when the first screen is in an off state, where the target application was switched from running on the first screen to running in the background of the electronic device.

The key information display module 220 is configured to display key information of the notification message on the second screen.

Furthermore, in a case where there are multiple target applications, and each of the multiple target applications sends one or more notification messages, the key information display module 220 includes a first key information display submodule.

The first key information display submodule is configured to display, on the second screen, key information of a target notification message, and hide key information of other notification messages of the multiple notification messages than the target notification message, where a receipt time of the target notification message is the latest among the receipt times of the multiple notification messages, or a priority of the target notification message is the highest among the priorities of the multiple notification messages.

Furthermore, the key information display module 220 further includes a second key information display submodule.

The second key information display submodule is configured to, in response to a third touch operation performed on the second screen, display, on the second screen, the key information of the multiple notification messages.

Furthermore, the second key information display submodule includes: a size acquisition unit, a first key information display unit and a second key information display unit.

The size acquisition unit is configured to acquire the size of the second screen in response to the third touch operation performed on the second screen.

The first key information display unit is configured to simultaneously display, on the second screen, the key information of the multiple notification messages when the size of the second screen supports simultaneous displaying of the key information of the multiple notification messages.

The second key information display unit is configured to display, on the second screen, the key information of the multiple notification messages in a switching manner, when the size of the second screen does not support the simultaneous displaying of the key information of the multiple notification messages.

Furthermore, the information display apparatus 200 further includes a first detailed information display module.

The first detailed information display module is configured to, in response to a first touch operation performed on the key information, switch, on the second screen, from displaying the key information of the notification message to displaying the detailed information of the notification message, where the detailed information includes the key information.

Furthermore, when the size of the first screen is larger than the size of the second screen, the first detailed information display module includes: a detailed information loading submodule, a size adjustment submodule and a detailed information display submodule.

The detailed information loading submodule is configured to load the detailed information of the notification message into a display container of a virtual screen, where the size of the virtual screen is greater than or equal to the size of the first screen.

The size adjustment submodule is configured to perform first size adjustment on the display container according to the size of the second screen, and obtain detailed information of the notification message after undergoing the first size adjustment.

Furthermore, the size adjustment submodule includes: a first target display container obtaining unit and a second target display container obtaining unit.

The first target display container obtaining unit is configured to change the size of the display container to obtain a first target display container, where the size ratio of the first target display container matches the size ratio of the second screen.

The second target display container obtaining unit is configured to perform scaling processing on the first target display container, to obtain a second target display container and the detailed information of the notification message after undergoing the first size adjustment, where the size of the second target display container matches the size of the second screen.

The detailed information display submodule is configured to display, on the second screen, the detailed information of the notification message after undergoing the first size adjustment.

Furthermore, the detailed information display submodule includes: a surface view definition unit and a detailed information display unit.

The surface view definition unit is configured to create an independent window in the second screen, and define a surface view in the independent window.

The detailed information display unit is configured to display, in the surface view, the detailed information of the notification message after undergoing the first size adjustment.

Furthermore, the information display apparatus 200 further includes a key information display module.

The key information display module is configured to, in response to a second touch operation performed on the detailed information, switch, on the second screen, from displaying the detailed information of the notification message to displaying the key information of the notification message.

Furthermore, the information display apparatus 200 further includes a detailed information switching display module.

The detailed information switching display module is configured to, in response to the first screen being switched from being in the off state to being in the on state, switch the detailed information of the notification message from being displayed on the second screen to being displayed on the first screen.

Furthermore, the information display apparatus 200 further includes: a display container migration module, a size adjustment module and a detailed information display module.

The display container migration module is configured to migrate the display container of the virtual screen to the first screen, in response to the first screen being switched from being in the off state to being in the on state.

The size adjustment module is configured to perform second size adjustment on the display container according to the size of the first screen, and obtain detailed information of the notification message after undergoing the second size adjustment.

Furthermore, the size adjustment module includes: a third target display container obtaining submodule and a fourth target display container obtaining submodule.

The third target display container obtaining submodule is configured to change the size of the second target display container to obtain a third target display container, where the size of the third target display container matches the size of the first screen.

The fourth target display container obtaining submodule is configured to cancel scaling processing of the third target display container, and obtain the fourth target display container and the detailed information of the notification message after undergoing the second size adjustment, where the size ratio of the fourth target display container matches the size ratio of the first screen.

The detailed information display module is configured to display, on the first screen, the detailed information of the notification message after undergoing the second size adjustment.

Those skilled in the field can clearly understand that, for the convenience and brevity of description, the specific working processes of the above-described apparatus and modules may refer to the corresponding processes in the aforementioned method embodiments, which will not be repeated here.

In several embodiments provided in the present disclosure, the coupling between modules may be electrical, mechanical or in other forms.

In addition, the individual functional modules in the embodiments of the present disclosure may be integrated into one processing module, or each module may exist physically separately, or two or more modules may be integrated into one module. The above integrated module may be implemented in the form of hardware or software functional modules.

As illustrated in FIG. 19, a structural block diagram of an electronic device 100 provided in an embodiment of the present disclosure is shown. The electronic device 100 may be a smart phone, a tablet computer, an e-book, or other electronic devices capable of running applications. The electronic device 100 in the present disclosure may include one or more of: a processor 110, a memory 120, and one or more application programs. The one or more application programs may be stored in the memory 120 and configured to be executed by one or more processors 110, and the one or more programs are configured to execute the method as described in the aforementioned method embodiments.

The processor 110 may include one or more processing cores. The processor 110 uses various interfaces and lines to connect various parts within the entire electronic device 100, and performs various functions of the electronic device 100 and processes data by running or executing instructions, programs, code sets or instruction sets stored in the memory 120, and calling data stored in the memory 120. Optionally, the processor 110 may be implemented in at least one hardware selected form of digital signal processing (DSP), field-programmable gate array (FPGA), and programmable logic array (PLA). The processor 110 may integrate one or a combination of a central processing unit (CPU), a graphics processing unit (GPU), a modem, and the like. The CPU mainly processes the operating system, user interface and applications. The GPU is responsible for rendering and drawing content to be displayed. The modem is used to handle wireless communications. It is understandable that the modem may not be integrated into the processor 110, but may be implemented separately through a communication chip.

The memory 120 may include a random access memory (RAM) or a read-only memory (ROM). The memory 120 may be used to store instructions, programs, codes, code sets, or instruction sets. The memory 120 may include a program storage area and a data storage area. The program storage area may store instructions for implementing an operating system, instructions for implementing at least one function (such as a touch function, a sound playback function, and an image playback function), instructions for implementing the following various method embodiments, etc. The data storage area may also store data created by the electronic device 100 during use (such as a phone book, audio and video data, and chat record data).

As illustrated in FIG. 20, a structural block diagram of a computer-readable storage medium provided in an embodiment of the present disclosure is shown. The computer-readable medium 300 stores program codes, which can be called by a processor to execute the method described in the above method embodiments.

The computer-readable storage medium 300 may be an electronic memory such as a flash memory, an electrically erasable programmable read only memory (EEPROM), an EPROM, a hard disk, or a ROM. Optionally, the computer-readable storage medium 300 includes a non-transitory computer-readable storage medium. The computer-readable storage medium 300 has a storage space for program codes 310 for executing any method steps in the above-described methods. The program codes may be read from or written into one or more computer program products. The program codes 310 may be compressed, for example, in a suitable form.

In summary, in the information display method and apparatus, the electronic device, and the storage medium provided in the embodiments of the present disclosure, a notification message sent by a target application is received when the first screen is in an off state, where the target application was switched from running on the first screen to running in the background of the electronic device. Key information of the notification message is displayed on the second screen. By displaying, on the second screen, the key information of the notification message when the notification message sent by the target application is received in the off state of the first screen, it is ensured that the notification message can be effectively and timely delivered, and the user experience is improved.

Finally, it is notable that the above embodiments are only used to illustrate the technical solutions of the present disclosure, rather than limiting it. Although the present disclosure has been described in detail with reference to the aforementioned embodiments, those skilled in the art should understand that they can still modify the technical solutions described in the aforementioned embodiments, or make equivalent replacements for some of the technical features therein. However, these modifications or replacements do not cause the essence of the corresponding technical solutions to deviate from the spirit and scope of the technical solutions of the embodiments of the present disclosure.

## Claims

1. An information display method, for an electronic device, wherein the electronic device comprises a first screen and a second screen, and the method comprises:
receiving a notification message sent by a target application while the first screen in an off state, wherein the target application was switched from running on the first screen to running in background of the electronic device; and
displaying, on the second screen, key information of the notification message.

2. The method as claimed in claim 1, wherein after displaying, on the second screen, the key information of the notification message, the method further comprises:
in response to a first touch operation performed on the key information, switching, on the second screen, from displaying the key information of the notification message to displaying detailed information of the notification message, wherein the detailed information comprises the key information.

3. The method as claimed in claim 2, wherein the key information of the notification message is displayed in a first control on the second screen, and the switching, on the second screen, from displaying the key information of the notification message to displaying the detailed information of the notification message in response to the first touch operation performed on the key information, comprises:
in response to the first touch operation performed on the first control, switching from displaying the key information of the notification message through the first control on the second screen to displaying the detailed information of the notification message through a second control on the second screen.

4. The method as claimed in claim 2, wherein after switching, on the second screen, from displaying the key information of the notification message to displaying the detailed information of the notification message, the method further comprises:
in response to a second touch operation performed on the detailed information, switching, on the second screen, from displaying the detailed information of the notification message to displaying the key information of the notification message.

5. The method as claimed in claim 4, wherein the detailed information of the notification message is displayed in a second control on the second screen, and the switching, on the second screen, from displaying the detailed information of the notification message to displaying the key information of the notification message in response to the second touch operation performed on the detailed information, comprises:
in response to the second touch operation performed on the second control, switching from displaying the detailed information of the notification message through the second control on the second screen to displaying the key information of the notification message through a first control on the second screen.

6. The method as claimed in claim 2, wherein after switching, on the second screen, from displaying the key information of the notification message to displaying the detailed information of the notification message, the method further comprises:
in response to the first screen being switched from being in the off state to being in an on state, switching the detailed information of the notification message from being displayed on the second screen to being displayed on the first screen.

7. The method as claimed in claim 6, wherein after switching the detailed information of the notification message from being displayed on the second screen to being displayed on the first screen, the method further comprises:
turning off the second screen; or
switching, on the second screen, from displaying the detailed information of the notification message to displaying other information.

8. The method as claimed in claim 2, wherein in a case where a size of the first screen is larger than a size of the second screen, the switching, on the second screen, from displaying the key information of the notification message to displaying the detailed information of the notification message, comprises:
loading the detailed information of the notification message into a display container of a virtual screen, wherein a size of the virtual screen is greater than or equal to the size of the first screen;
performing first size adjustment on the display container according to the size of the second screen, and obtaining detailed information of the notification message after undergoing the first size adjustment; and
displaying, on the second screen, the detailed information of the notification message after undergoing the first size adjustment.

9. The method as claimed in claim 8, wherein the displaying, on the second screen, the detailed information of the notification message after undergoing the first size adjustment comprises:
creating an independent window in the second screen, and defining a surface view in the independent window; and
displaying, in the surface view, the detailed information of the notification message after undergoing the first size adjustment.

10. The method as claimed in claim 8, wherein the performing the first size adjustment on the display container according to the size of the second screen, and obtaining the detailed information of the notification message after undergoing the first size adjustment, comprises:
obtaining a first target display container by changing a size of the display container, wherein a size ratio of the first target display container matches a size ratio of the second screen; and
obtaining a second target display container and the detailed information of the notification message after undergoing the first size adjustment by performing scaling processing on the first target display container, wherein a size of the second target display container matches the size of the second screen.

11. The method as claimed in claim 10, wherein after displaying, on the second screen, the detailed information of the notification message, the method further comprises:
in response to the first screen being switched from being in the off state to being in an on state, migrating the display container of the virtual screen to the first screen;
performing second size adjustment on the display container according to the size of the first screen, and obtaining detailed information of the notification message after undergoing the second size adjustment; and
displaying, on the first screen, the detailed information of the notification message after undergoing the second size adjustment.

12. The method as claimed in claim 11, wherein the performing the second size adjustment on the display container according to the size of the first screen, and obtaining the detailed information of the notification message after undergoing the second size adjustment, comprises:
obtaining a third target display container by changing the size of the second target display container, wherein a size of the third target display container matches the size of the first screen; and
obtaining a fourth target display container and the detailed information of the notification message after undergoing the second size adjustment by cancelling scaling processing of the third target display container, wherein a size ratio of the fourth target display container matches a size ratio of the first screen.

13. The method as claimed in any one of claims 1 to 12, wherein the target application comprises a plurality of target applications, each of the plurality of target applications sends one or more notification messages, and the displaying, on the second screen, the key information of the notification message comprises:
displaying, on the second screen, key information of a target notification message, and hiding, on the second screen, key information of other notification messages of the plurality of notification messages than the target notification message, wherein a receipt time of the target notification message is the latest among receipt times of the plurality of notification messages, or a priority of the target notification message is the highest among priorities of the plurality of notification messages.

14. The method as claimed in claim 13, wherein after displaying, on the second screen, the key information of the target notification message and hiding, on the second screen, the key information of other notification messages of the plurality of notification messages than the target notification message, the method further comprises:
in response to a third touch operation performed on the second screen, displaying, on the second screen, the key information of the plurality of notification messages.

15. The method as claimed in claim 14, wherein the displaying, on the second screen, the key information of the plurality of notification messages in response to the third touch operation performed on the second screen comprises:
in response to the third touch operation performed on the second screen, acquiring a size of the second screen;
in response to the size of the second screen supporting simultaneous displaying of the key information of the plurality of notification messages, displaying, on the second screen, the key information of the plurality of notification messages simultaneously; or
in response to the size of the second screen not supporting the simultaneous displaying of the key information of the plurality of notification messages, displaying, on the second screen, the key information of the plurality of notification messages in a switching manner.

16. The method as claimed in claim 13, wherein the hiding, on the second screen, the key information of other notification messages of the plurality of notification messages than the target notification message comprises:
not displaying, on the second screen, the key information of other notification messages of the plurality of notification messages than the target notification message; or
blurring, on the second screen, the key information of other notification messages of the plurality of notification messages than the target notification message.

17. The method as claimed in claim 13, wherein the displaying, on the second screen, the key information of the target notification message comprises:
displaying, on the second screen, the key information of the plurality of notification messages simultaneously; or
displaying, on the second screen, the key information of the plurality of notification messages in a switching manner.

18. An information display apparatus, for an electronic device, wherein the electronic device comprises a first screen and a second screen, and the apparatus comprises:
a notification message receiving module, configured to receive a notification message sent by a target application while the first screen in an off state, wherein the target application was switched from running on the first screen to running in background of the electronic device; and
a key information display module, configured to display, on the second screen, key information of the notification message.

19. An electronic device, comprising a memory and a processor, wherein the memory is coupled to the processor, the memory stores instructions which, when being executed by the processor, cause the processor to implement the method as claimed in any one of claims 1 to 17.

20. A computer-readable storage medium storing program codes thereon, wherein the program codes are invokable by a processor to implement the method as claimed in any one of claims 1 to 17.
